(19) Europäisches Patentamt
European Patent Office
Office européen des brevets

(11) **EP 3 848 227 A1**

(12) **EUROPEAN PATENT APPLICATION**
published in accordance with Art. 153(4) EPC

(43) Date of publication:
**14.07.2021 Bulletin 2021/28**

(51) Int Cl.:
***B60L 9/30*** (2006.01)          ***B60L 13/00*** (2006.01)
***H02P 9/04*** (2006.01)

(21) Application number: **19858206.6**

(22) Date of filing: **07.03.2019**

(86) International application number:
**PCT/JP2019/009044**

(87) International publication number:
**WO 2020/049767 (12.03.2020 Gazette 2020/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **04.09.2018   JP 2018165158**

(71) Applicant: **Hitachi, Ltd.**
**Tokyo 100-8280 (JP)**

(72) Inventors:
• **OURA, Yuta**
**Tokyo 100-8280 (JP)**

• **SHIMADA, Motomi**
**Tokyo 100-8280 (JP)**
• **INARIDA, Satoru**
**Tokyo 100-8280 (JP)**
• **MOCHIZUKI, Kento**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **DRIVE CONTROL DEVICE, DRIVE CONTROL METHOD, AND RAIL VEHICLE MOUNTED WITH SAID DRIVE CONTROL DEVICE**

(57)     When there is a restriction in an outfitting space, a mounted engine generator unit requires an operation restriction such as, for example, the current restriction of a generator if a sufficient heat capacity is not ensured. Therefore, this drive control device is provided with: a power conversion circuit for converting the AC power generated by the generator driven by an engine to a DC power; and a control unit for controlling the switching op-eration of the power conversion circuit on the basis of a switching operation mode. The control unit changes the switching operation mode in accordance with the rotational speed of the generator driven by the engine, thereby reducing and furthermore minimizing the percentage of the harmonic components of AC current for driving the generator.

FIG. 3

EP 3 848 227 A1

**Description**

Technical Field

The present invention relates to a drive control device and a drive control method for a power converter circuit mounted in a rail vehicle and the like, and a rail vehicle mounted with the drive control device.

Background Art

Trains formed using rail vehicles including inverter drive systems that use power converter circuits have become widespread. Among these, trains including self-power sources, such as engines, are being developed so as to supply electric power to the power converter circuits from other than overhead lines.
As a train of this type, for example, Patent Literature 1 discloses a configuration capable of including an engine power generator unit, a converter, a power conversion circuit for driving electric motor (an inverter), and a main motor, which are necessary for driving, in one vehicle by sharing a power converter circuit that converts an AC power supplied from a plurality of AC sources into a DC power to achieve a size reduction of a drive system.

Citation List

Patent Literature

Patent Literature 1: Japanese Unexamined Patent Application Publication No. 2014-140294

Summary of Invention

Technical Problem

Upon including equipment necessary for driving, other equipment included on the same vehicle is also required to have a reduced size in addition to the size reduction of the drive system in order to fit the equipment in one vehicle. For example, as one of the other equipment, in the engine power generator unit including an power generator driven by an engine, on one hand, it is required to select an engine power generator unit that can satisfy the limitation of an outfitting space, and on the other hand, there occurs a disadvantage in securing a thermal capacity. This is because when the thermal capacity cannot be secured, the power generator needs an operation (driving) restriction, such as a current restriction.
It is an object of the present invention to provide a switching mode of a converter that reduces, and eventually minimizes, a content rate of a harmonic component of an alternating current flowing in a power generator in order to achieve an engine power generator unit that is compact and satisfies the performance.

Solution to Problem

The drive control device according to the present invention includes a power converter circuit that converts an AC power generated by a power generator driven by an engine into a DC power, and a controller that controls a switching operation of the power converter circuit based on a switching mode. The controller changes the switching mode in accordance with a rotary speed of the power generator driven by the engine.

Advantageous Effects of Invention

The present invention ensures reducing a loss of the power generator to reduce a heat generation amount of the power generator by changing the switching mode of the converter in accordance with the rotary speed of the power generator in order to reduce, and eventually minimize, a content rate of a harmonic component of an alternating current flowing in the power generator.

Brief Description of Drawings

Fig. 1 is a drawing illustrating an overall configuration of a drive system for rail vehicle as an exemplary drive system according to the present invention.

Fig. 2 is a drawing illustrating a schematic configuration of a power generation drive system by an engine according to a first embodiment of the present invention.

Fig. 3 is a drawing describing a drive control unit according to a first embodiment.

Fig. 4 is a drawing illustrating a graph that determines an exemplary change timing of a switching mode in a PWM converter control.

Fig. 5 is a drawing illustrating a flowchart describing an operation of a PWM converter controller in the drive control unit.

Fig. 6 is a drawing illustrating a schematic configuration of a power generation drive system by an engine according to a second embodiment of the present invention.

Fig. 7 is a drawing illustrating a configuration to command the switching mode to drive control units of respective vehicles from a formation control unit according to a third embodiment of the present invention.

Description of Embodiments

The following describes first to third embodiments as configurations for executing the present invention by referring to the drawings.

Prior to the description of each of the embodiments, a basic configuration of a drive system according to the present invention will be described.

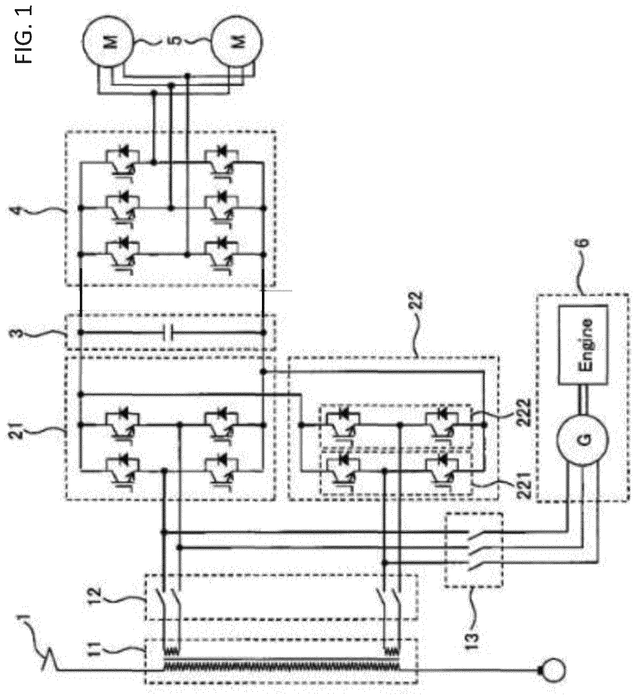

Fig. 1 is a drawing illustrating an overall configuration of a drive system for rail vehicle as an exemplary drive system according to the present invention.

A power collector 1 takes in a single-phase AC power from an overhead line (not illustrated) coupled to an electrical substation as a single-phase AC power supply. A main transformer 11 coupled to the power collector 1 steps down an overhead line voltage, and has two winding wires arranged on a low voltage side and a single-phase alternate current is supplied to each winding wire.

In the drive system, a power conversion circuit 21 for power supply and a power conversion circuit 22 for power supply to which the single-phase alternate current is input via a contactor 12 from each of the winding wires include two phases of switching circuits configured by connecting two connection bodies in series configured by inverse-parallelly connecting a semiconductor element (such as an IGBT) having a self-arc-extinguishing ability to a diode, and convert the single-phase AC power into a DC power.

A smoothing capacitor 3, which is coupled to direct current output sides of the power conversion circuits 21 and 22 for power supply to smooth the DC voltage, has both ends. A voltage between both the ends serves as a voltage source to supply a DC power to a power conversion circuit 4 for driving electric motor. The power conversion circuit 4 for driving electric motor includes three phases of switching circuits similar to the power conversion circuits 21 and 22 for power supply to output a three-phase AC power to drive a main motor 5.

Furthermore, an engine power generator unit 6 configured of an engine and a power generator coupled to the engine supplies the three-phase AC power supplied from the power generator unit 6 to the power conversion circuits 21 and 22 for power supply via a contactor 13.

As described above, the drive system for rail vehicle illustrated in Fig. 1 enables an operation by a bimode of an operation mode by the AC power supply from the power collector 1 and an operation mode by an AC power supply from the engine power generator unit 6.

[First Embodiment]

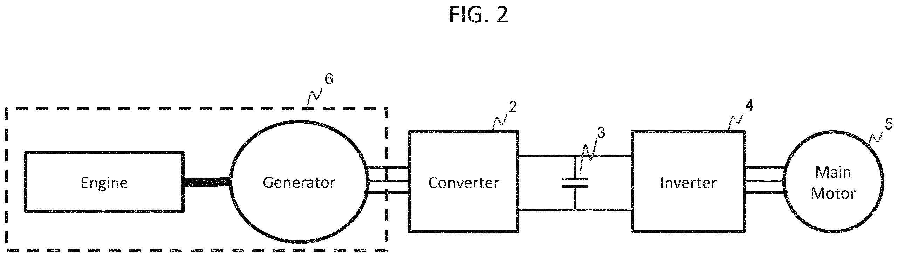

Fig. 2 is a drawing illustrating a schematic configuration of a power generation drive system by an engine according to a first embodiment of the present invention.

The drive system by an engine is configured of the engine power generator unit 6, a power conversion circuit 2 for power supply (corresponds to the previous power conversion circuits 21 and 22 for power supply) to which a generated power from the unit 6 is supplied, the smoothing capacitor 3, the inverter 4 for driving main motor, and the main motor 5 driven by the inverter 4.

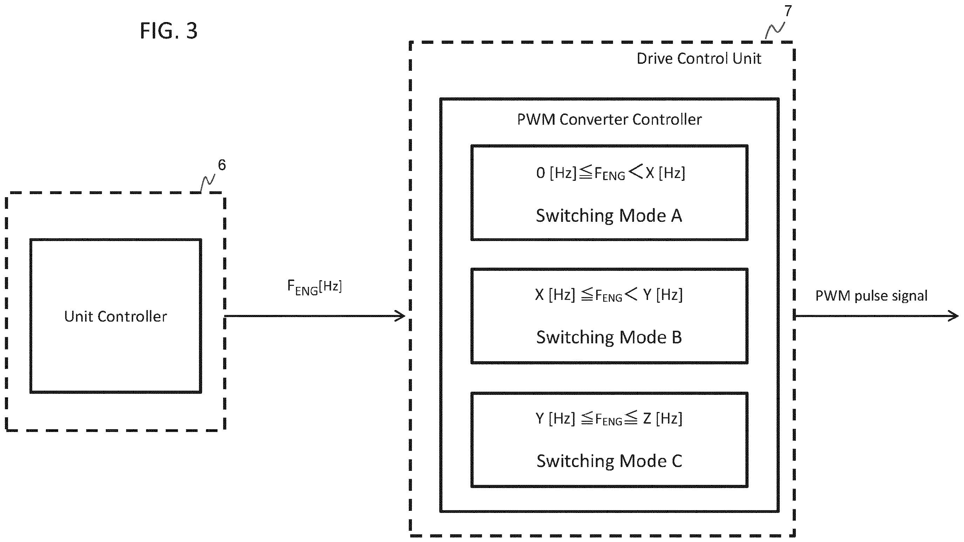

Fig. 3 is a drawing describing a drive control unit according to a first embodiment.

A drive control unit 7 includes a PWM converter controller that uses a rotary speed ($F_{ENG}$) of the engine power generator transmitted from the engine power generator unit controller for controlling the engine power generator unit 6 as an input signal, and a PWM pulse signal serving as an operation signal of a switching element included in the converter (the power conversion circuit 2 for power supply) as an output signal.

The PWM converter controller changes switching mode in accordance with the rotary speed ($F_{ENG}$) of the power generator input from the engine power generator unit 6, and outputs the PWM pulse signal for operating in the switching mode to the converter (the power conversion circuit 2 for power supply). Fig. 3 illustrates cases of having a switching mode A where the rotary speed ($F_{ENG}$) of the power generator corresponds to a range from 0 to X [Hz], a switching mode B where the rotary speed ($F_{ENG}$) of the power generator corresponds to a range from X to Y [Hz], and a switching mode C where the rotary speed ($F_{ENG}$) of the power generator corresponds to a range from Y to Z [Hz] as the switching mode.

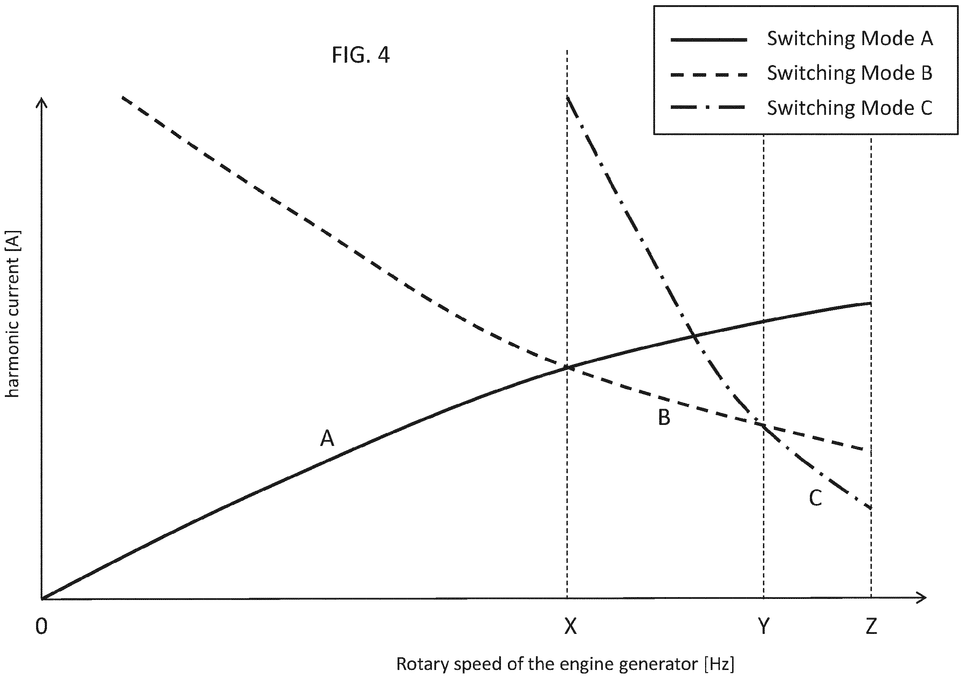

Fig. 4 is a drawing illustrating a graph that determines an exemplary change timing of the switching modes in the PWM converter control. In the graph illustrated in Fig. 4, the vertical axis is a harmonic current [A] flowing in the engine power generator unit, and the horizontal axis is a rotary speed [Hz] of the engine power generator. The PWM converter controller has "the switching mode A," "the switching mode B," and "the switching mode C" as a plurality of the switching modes. The change timing of the switching modes is to be determined in accordance with the rotary speed of the power generator.

The present invention is to determine the rotary speed of the power generator for changing the switching mode so as to reduce, and eventually minimize a content rate of a harmonic component of the alternating current flowing in the power generator. For example, as illustrated in Fig. 4, the switching mode to be employed for the rotary speed ($F_{ENG}$) of the power generator is determined by coupling the ranges of rotary speed of the switching modes that minimize the harmonic current since each of the switching modes A, B, and C have the harmonic current (corresponds to the content rate of the harmonic component of the alternating current) that changes in accordance with the rotary speed ($F_{ENG}$) of the power generator.

Specifically, the switching mode A that minimizes the harmonic current is employed when the rotary speed ($F_{ENG}$) of the power generator is up to X [Hz] where the switching mode A intersects with the switching mode B, the switching mode B that minimizes the harmonic current is employed when the rotary speed ($F_{ENG}$) of the power generator is from X [Hz] to Y [Hz] where the switching mode B intersects with the switching mode C, and the switching mode C that minimizes the harmonic current is employed when the rotary speed ($F_{ENG}$) of the power generator is from Y [Hz] to Z [Hz].

Summarizing the above, the relationship between the range of the rotary speed $F_{ENG}$ of the power generator and the switching mode (A, B, and C) to be employed is determined as follows.

0 [Hz] $\leq F_{ENG} <$ X [Hz] : switching mode A

X [Hz] $\leq F_{ENG} <$ Y [Hz] : switching mode B

Y [Hz] $\leq F_{ENG} \leq$ Z [Hz]: switching mode C

The PWM converter control by the above switching mode ensures an operation in a state of less harmonic current in all speed range of the engine power generator as illustrated in Fig. 4.

Application of the present invention ensures reducing a loss of the power generator to reduce the heat generation amount of the power generator by reducing, and eventually minimizing the content rate of the harmonic component of the alternating current flowing in the power generator.

For example, when the power generator is rotating at an operating point in a low speed range (idling state), it is operated in a non-synchronized PWM control as the switching mode. That is, in the above-described example, the switching mode A corresponds to the non-synchronized PWM control.

On the other hand, when the power generator is rotating at an operating point in a high speed range, it is operated in a synchronized PWM control as a switching mode. That is, in the above-described example, the switching modes B and C correspond to the synchronized PWM control (numbers of pulses are different between the switching modes B and C).

Here, as a value to indicate the harmonic component of the alternating current, for example, use of a total harmonic distortion rate (THD) is conceivable.

[Math. 1]

$$THD = \frac{\sqrt{I_2^2 + I_3^2 + I_4^2 + \cdots + I_n^2}}{I_1}$$

THD (Total Harmonic distortion): total harmonic distortion rate

$I_1$: effective current of original signal component

$I_2, I_3, ..., I_n$: effective current of harmonic component of integer multiple frequency of original signal component

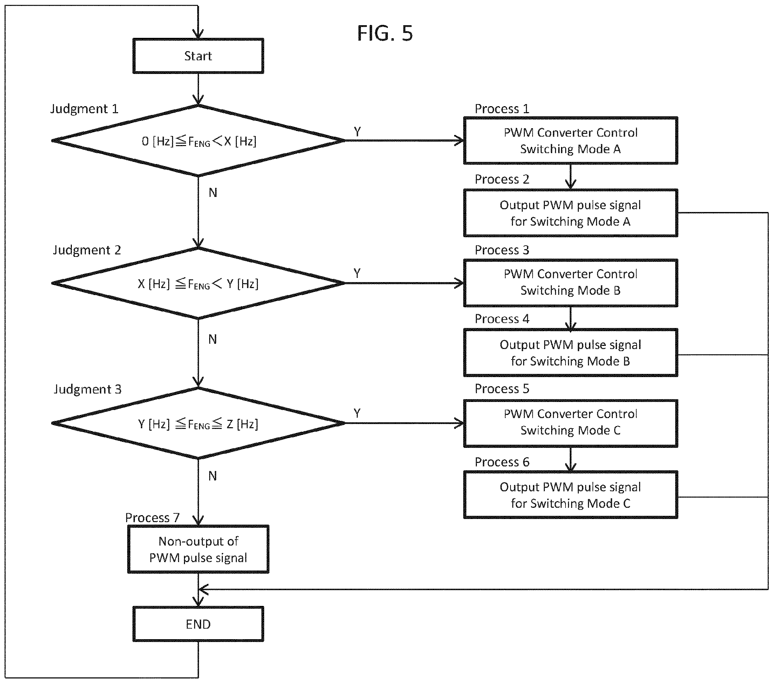

Fig. 5 is a drawing illustrating a flowchart describing an operation of the PWM converter controller in the drive control unit.

At Judgement 1, when the rotary speed $F_{ENG}$ [Hz] of the power generator satisfies the condition of 0 [Hz] $\leq F_{ENG} <$ X [Hz] (Y), the process transitions to Process 1 to select the switching mode A in the PWM converter control. Afterwards, the process transitions to Process 2, and the PWM pulse signal for performing a switching operation of the switching mode A is output.

When the condition is not satisfied (N), the process transitions to Judgment 2.

At Judgment 2, when the rotary speed $F_{ENG}$ [Hz] of the power generator satisfies the condition of X [Hz] $\leq F_{ENG}$ < Y [Hz] (Y), the process transitions to Process 3 to select the switching mode B in the PWM converter control. Afterwards, the process transitions to Process 4, and the PWM pulse signal for performing a switching operation of the switching mode B is output.

When the condition is not satisfied (N), the process transitions to Judgment 3.

At Judgement 3, when the rotary speed $F_{ENG}$ [Hz] of the power generator satisfies the condition of Y [Hz] $\leq F_{ENG} \leq$ Z[Hz] (Y), the process transitions to Process 5 to select the switching mode C in the PWM converter control. Afterwards, the process transitions to Process 6, and the PWM pulse signal for performing a switching operation of the switching mode C is output.

When the condition is not satisfied (N), the process transitions to Process 7 and the PWM pulse signal is not output.

[Second Embodiment]

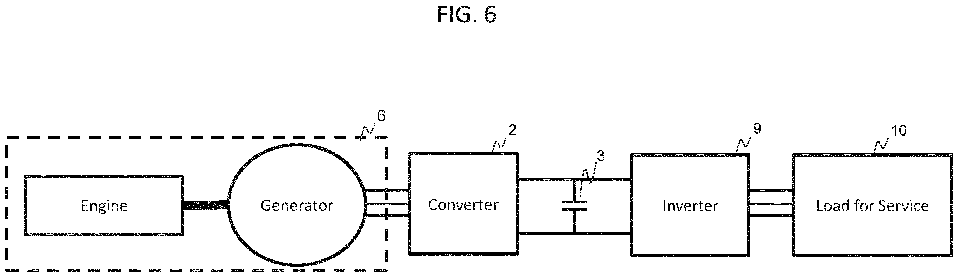

Fig. 6 is a drawing illustrating a schematic configuration of a power generation drive system by an engine according to a second embodiment of the present invention.

While the first embodiment described in Fig. 2 is the drive system for rail vehicle drive system including the inverter 4 for driving main motor that drives the main motor 5, the second embodiment is a drive system for rail vehicle including an inverter 9 for service power supply that supplies an electric power to a load 10 for in-vehicle service, such as air conditioning and lighting in the vehicle. Application of the present invention to this drive system obtains an effect similar to that of the first embodiment previously described.

[Third Embodiment]

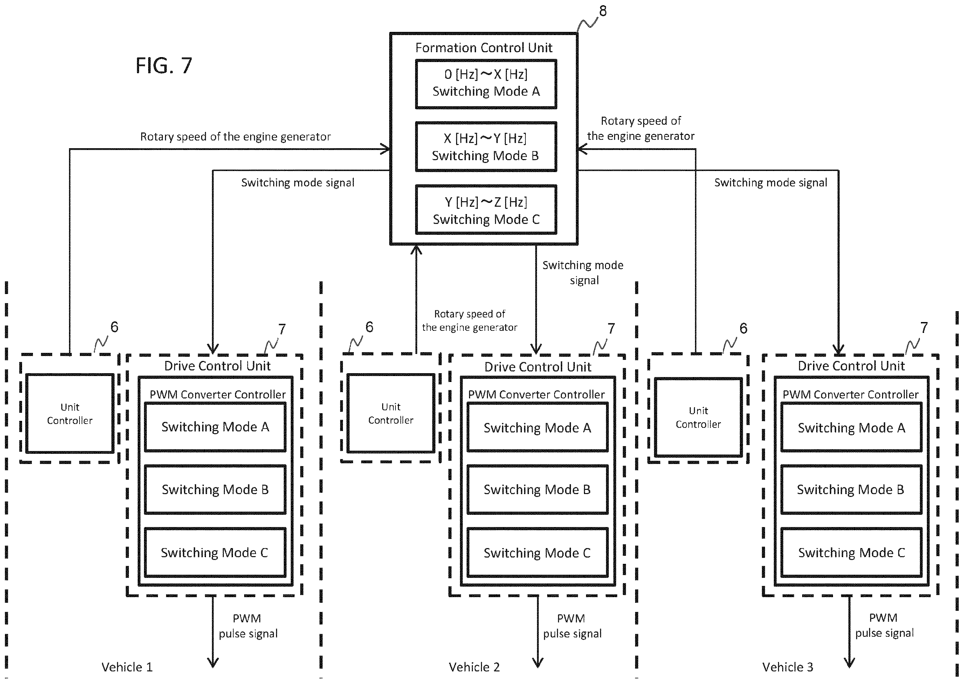

Fig. 7 is a drawing illustrating a configuration that commands the switching mode to the drive control units in the respective vehicles from a formation control unit according to a third embodiment of the present invention.

The third embodiment has a configuration in which a formation control unit 8 that unifies states of equipment included in the formation commands the switching mode to the drive control units 7 of the respective vehicles. The formation control unit 8 uses rotary speeds of the power generators transmitted from the respective engine power generator unit controllers for controlling the engine power generator units 6 included in the respective vehicles as input signals, and switching mode signals to the drive control units 7 of the respective vehicles as output signals. The drive control units 7 of the respective vehicles that use the switching mode signals output the PWM pulse signal to the converter (power conversion circuit 2 for power supply) from the PWM converter controller similarly to Fig. 3.

The switching mode signal is selected such that the formation control units 8, which use, as an input, power generator rotary speed information of the engine power generator units 6 included in the respective vehicles, executes the process similar to the flowchart illustrated in Fig. 5.

In the present invention, the configuration does not necessarily have the PWM converter controller itself in the drive control unit changing the switching mode in accordance with the rotary speed information of the power generator directly received from the engine power generator unit controller as in the first or second embodiment, but may be a configuration in which the switching mode of the PWM converter controller in the drive control unit is changed in accordance with the control signal from other equipment such as the formation control unit as in the third embodiment. In short, when the rotary speed at the switching mode change is determined so as to reduce, and eventually minimize the content rate of the harmonic component of the alternating current flowing in the power generator upon changing the switching mode based on the rotary speed of the power generator, the effect similar to those described in the first to third embodiments can be obtained.

While the first to third embodiments describe the configuration of changing the switching mode in accordance with the rotary speed of the power generator, it is possible to employ a configuration in which a modulation factor in association with the switching operation of the power conversion circuit for power supply (the converter) or an operating frequency of the power conversion circuit for power supply (the converter) in a linear relationship with the rotary speed of the power generator is employed instead of the rotary speed of the power generator, and the switching mode is changed in accordance with the above-described modulation factor or the above-described operating frequency.

List of Reference Signs

    1 power collector
    2 power conversion circuit for power supply (converter)

3 smoothing capacitor

4 power conversion circuit for driving electric motor (inverter circuit for driving main motor)

5 main motor

6 engine power generator unit

7 drive control unit

8 formation control unit

9 inverter for service power supply

10 load for in-vehicle service

11 main transformer

12, 13 contactor

2, 21, 22 power conversion circuit for power supply

221, 222 one phase of conversion circuit configuring power conversion circuit 22 for power supply

**Claims**

1. A drive control device comprising:

   a power converter circuit that converts an AC power generated by a power generator driven by an engine into a DC power; and
   a controller that controls a switching operation of the power converter circuit based on a switching mode,
   wherein the controller changes the switching mode in accordance with a rotary speed of the power generator.

2. The drive control device according to claim 1,
   wherein the switching mode is a switching operation that reduces a content rate of a harmonic component of an alternating current flowing in the power generator.

3. The drive control device according to claim 2,
   wherein the controller changes the switching mode in accordance with the rotary speed of the power generator to minimize a content rate of a harmonic component of an alternating current flowing in the power generator over an entire speed range of the power generator.

4. The drive control device according to any one of claims 1 to 3,
   wherein the controller controls the switching operation in a PWM control method, and employs a non-synchronized PWM control when the power generator is in a low speed range and employs a synchronized PWM control when the power generator is in a high speed range, as the switching mode.

5. The drive control device according to any one of claims 1 to 4,
   wherein the controller uses a modulation factor in association with a switching operation of the power converter circuit instead of the rotary speed of the power generator.

6. The drive control device according to any one of claims 1 to 4,
   wherein the controller uses an operating frequency of the power converter circuit instead of the rotary speed of the power generator.

7. A rail vehicle comprising:

   the drive control device according to any one of claims 1 to 6;
   the engine;
   a power generator driven by the engine; and
   a second power converter circuit that drives an AC load using a DC power converted by the power converter circuit as a power supply.

8. A drive control method that controls a switching mode for driving a power converter circuit that converts an AC power generated by a power generator driven by an engine into a DC power, the method comprising:

   a first step of detecting a rotary speed of the power generator;
   a second step of reducing a content rate of a harmonic component of an alternating current flowing in the power generator by changing the switching mode in accordance with the detected rotary speed; and
a third step of outputting a driving pulse signal to the power converter circuit based on the changed switching mode.

9. The drive control method according to claim 8,
wherein the second step changes the switching mode into the switching mode that minimizes a content rate of a harmonic component of an alternating current flowing in the power generator over an entire speed range of the power generator.

10. The drive control method according to claim 8 or 9,
wherein the first step detects a modulation factor in association with a switching operation of the power converter circuit or an operating frequency of the power converter circuit instead of the rotary speed of the power generator, and
wherein the second step changes the switching mode in accordance with the detected modulation factor or the detected operating frequency instead of the detected rotary speed.

FIG. 1

FIG. 2

FIG. 3

Drive Control Unit [7]

PWM Converter Controller

$0\,[Hz] \leqq F_{ENG} < X\,[Hz]$

Switching Mode A

$X\,[Hz] \leqq F_{ENG} < Y\,[Hz]$

Switching Mode B

$Y\,[Hz] \leqq F_{ENG} \leqq Z\,[Hz]$

Switching Mode C

Unit Controller [6]

$F_{ENG}[Hz]$

PWM pulse signal

FIG. 4

EP 3 848 227 A1

# FIG. 5

Start

Judgment 1 — $0\ [Hz] \leqq F_{ENG} < X\ [Hz]$ — Y → Process 1: PWM Converter Control Switching Mode A → Process 2: Output PWM pulse signal for Switching Mode A

N ↓

Judgment 2 — $X\ [Hz] \leqq F_{ENG} < Y\ [Hz]$ — Y → Process 3: PWM Converter Control Switching Mode B → Process 4: Output PWM pulse signal for Switching Mode B

N ↓

Judgment 3 — $Y\ [Hz] \leqq F_{ENG} \leqq Z\ [Hz]$ — Y → Process 5: PWM Converter Control Switching Mode C → Process 6: Output PWM pulse signal for Switching Mode C

N ↓

Process 7: Non-output of PWM pulse signal

END

12

EP 3 848 227 A1

## FIG. 6

FIG. 7

Formation Control Unit  8

0 [Hz] ~ X [Hz]
Switching Mode A

X [Hz] ~ Y [Hz]
Switching Mode B

Y [Hz] ~ Z [Hz]
Switching Mode C

Rotary speed of the engine generator

Rotary speed of
the engine generator

Switching mode signal

Switching mode signal

Switching mode signal

Rotary speed of
the engine generator

6    7    6    7    6    7

Unit Controller

Drive Control Unit

PWM Converter Controller

Switching Mode A

Switching Mode B

Switching Mode C

Unit Controller

Drive Control Unit

PWM Converter Controller

Switching Mode A

Switching Mode B

Switching Mode C

Unit Controller

Drive Control Unit

PWM Converter Controller

Switching Mode A

Switching Mode B

Switching Mode C

PWM
pulse signal

PWM
pulse signal

PWM
pulse signal

Vehicle 1

Vehicle 2

Vehicle 3

## INTERNATIONAL SEARCH REPORT

| International application No. |
| --- |
| PCT/JP2019/009044 |

**A. CLASSIFICATION OF SUBJECT MATTER**
Int.Cl. B60L9/30(2006.01)i, B60L13/00(2006.01)i, H02P9/04(2006.01)i

According to International Patent Classification (IPC) or to both national classification and IPC

**B. FIELDS SEARCHED**

Minimum documentation searched (classification system followed by classification symbols)
Int.Cl. B60L9/30, B60L13/00, H02P9/04

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2011-250671 A (HITACHI, LTD.) 08 December 2011, paragraphs [0027]-[0211], [0226]-[0228], fig. 1- 41, 48-50 (Family: none) | 1-2, 5-6, 8, 10 |
| Y | | 7 |
| A | | 3-4, 9 |
| Y | WO 2012/105282 A1 (HITACHI, LTD.) 09 August 2012, paragraphs [0015]-[0027], fig. 1 & US 2013/0313059 A1, paragraphs [0015]-[0027], fig. 1 & EP 2671748 A1 & AU 2012212816 A & CN 103338967 A & KR 10- 2013-0100013 A & BR 112013019259 A & ES 2587723 T & PL 2671748 T | 7 |
| A | | 3-4, 9 |

☐ Further documents are listed in the continuation of Box C.　☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 May 2019 (08.05.2019) | 21 May 2019 (21.05.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

**Patent documents cited in the description**

- JP 2014140294 A